# EUROPÄISCHE PATENTSCHRIFT

(11) **EP 1 674 512 B1**
(45) Veröffentlichungstag und Bekanntmachung des Hinweises auf die Patenterteilung: **20.02.2008**
(21) Anmeldenummer: 06007505.8
(22) Anmeldetag: 23.04.2001
(51) Int. Cl.: C08K 3/22, G02B 5/20, C08K 9/06, C08K 9/08

(54) **IR-absorbierende Zusammensetzungen**
IR absorbing compositions
Compositions absorbant le rayonnement infrarouge

(30) Priorität: 05.05.2000 DE 10022037
(43) Veröffentlichungstag der Anmeldung: 28.06.2006
(62) Teilanmeldung aus: 01931637.1
(73) Patentinhaber: Leibniz-Institut für Neue Materialien gemeinnützige GmbH, 66123 Saarbrücken (DE)
(72) Erfinder: Döbler, Martin, 40593 Düsseldorf (DE); Hoheisel, Werner, 51061 Köln (DE); Schmidt, Helmut, 66130 Saarbrücken-Güdingen (DE); Nonninger, Ralph, 66117 Saarbrücken (DE); Schichtel, Martin, 66125 Saarbrücken (DE); Jost, Martin, 66113 Saarbrücken (DE)
(74) Vertreter: Barz, Peter

(56) Entgegenhaltungen:
- EP-A- 0 795 565
- US-A- 5 807 511
- PATENT ABSTRACTS OF JAPAN Bd. 1997, Nr. 12, 25. Dezember 1997 (1997-12-25) -& JP 09 208863 A (KUREHA CHEM IND CO LTD), 12. August 1997 (1997-08-12)
- DATABASE WPI Section Ch, Week 199719 Derwent Publications Ltd., London, GB; Class A60, AN 1997-209595 XP002173525 -& JP 09 059591 A (NIPPON SHOKUBAI CO LTD) 4. März 1997 (1997-03-04)
- PATENT ABSTRACTS OF JAPAN Bd. 1998, Nr. 09, 31. Juli 1998 (1998-07-31) -& JP 10 101375 A (SUMITOMO METAL MINING CO LTD), 21. April 1998 (1998-04-21)

## Beschreibung

Die vorliegende Erfindung betrifft Zusammensetzungen enthaltend transparente thermoplastische Polymere und oberflächenmodifizierte Oxidteilchen mit einer Teilchengröße von weniger als 200 nm und organische NIR-Absorber sowie deren Herstellung, deren Verwendung und daraus hergestellte Erzeugnisse.

Verscheibungen aus Zusammensetzungen enthaltend transparente thermoplastische Polymere wie z.B. Polycarbonat bieten für den Automobilbereich und für Gebäude viele Vorteile gegenüber herkömmlichen Verscheibungen aus Glas, wie z.B. erhöhte Bruchsicherheit oder Gewichtsersparnis. Im Falle von Automobilverscheibungen erreicht man dadurch eine höhere Insassensicherheit bei Verkehrsunfällen und durch die Gewichtsersparnis einen niedrigeren Kraftstoffverbrauch. Schließlich lassen transparente thermoplastische Polymere und Zusammensetzungen, die transparente thermoplastische Polymere enthalten, aufgrund der einfacheren Formbarkeit eine wesentlich größere Designfreiheit zu.

Allerdings führt die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren. Wie bei Parry Moon, Journal of the Franklin Institute 230, Seiten 583-618 (1940), beschrieben ist, entfällt der größte Teil der solaren Energie neben dem sichtbaren Bereich des Lichtes zwischen 400 und 750 nm auf den Bereich des nahen Infrarots (NIR) zwischen 750 und 2500 nm. Eindringende Sonnenstrahlung wird z.B. im Inneren eines Automobils absorbiert und als langwellige Wärmestrahlung von 5 bis 15 µm emittiert. Da in diesem Bereich übliche Verscheibungsmaterialien und insbesondere transparente thermoplastische Polymere nicht transparent sind, kann die Wärmestrahlung nicht nach außen abstrahlen. Man erhält einen Treibhauseffekt. Um den Effekt möglichst klein zu halten sollte die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent. Es werden daher z.B. Zusätze benötigt, welche im NIR eine möglichst geringe Transparenz aufweisen, bei weiterhin möglichst hoher Transparenz im sichtbaren Bereich des Spektrums.

Für Anwendungen im Bereich Automobilverscheibung ist für die meisten Fälle eine Transmission im sichtbaren (LTA-Wert) von mindestens 70 % vorgeschrieben. Dieser Wert ist in SAE J 1796 (Ausgabe Mai 1995) definiert.

Für die Effizienz der Wärmeabsorption wird der TDS-Wert (Solar-direct transmittance) verwendet gemäß SAE J 1796, Ausgabe Mai 1995. Der Wert beschreibt, wieviel % der solaren Energie die Probe durchdringt und somit zur Erwärmung des Innenraumes beiträgt.

In der Literatur sind verschiedene wärmeabweisende Systeme, die im NIR eine geringe Transmission haben, beschrieben worden. Einerseits sind Oberflächenbeschichtungen oder Lacksysteme bekannt, andererseits gibt es auch infrarotabsorbierende Additive für transparente thermoplastische Polymere. Auf Grund der Möglichkeit der wirtschaftlicheren Herstellbarkeit der Zusammensetzungen aus Polymer und Additiv wäre ein NIR-absorbierendes Additiv wünschenswert.

Bekannte NIR-absorbierende Additive sind z.B. organische Infrarotabsorber, z.B. beschrieben in J. Fabian, H. Nakazumi, H. Matsuoka, Chem.Rev. 92, Seite 1197 ff. (1992).

Bislang sind jedoch keine organischen NIR-Absorber bekannt, welche einerseits geeignete thermische und Lichtstabilität aufweisen und andererseits bei einem TLT von größer als 70 % einen TDS von kleiner 50 % erreichen.

Andererseits sind in der Literatur Lacksysteme mit NIR-absorbierenden Partikeln aus Indium-Zinn-Oxid (ITO) beschrieben worden (z.B. in WO 00/14017). Derartige Additive absorbieren je nach Zusammensetzung und Konzentration ebenfalls im NIR. Aus JP-A 08011266, JP-A 0707482 und aus JP-A 08041441 sind ITO-Partikel bekannt, welche in einer organischen oder anorganischen Matrix eines Lackes eingebettet sind und NIR-Licht effektiv absorbieren bei gleichzeitiger hoher Transparenz im sichtbaren Bereich.

Die im vorherigen Absatz beschriebenen Lacksysteme haben jedoch die Nachteile, dass ein aufwendiger Lackierschritt erforderlich ist und dass es im übrigen nicht möglich ist, eine ausreichende Menge an ITO in die bekannten Lacksysteme einzubringen, ohne dass diese instabil werden.

In JP-A 070278795 wird Polycarbonat mit herkömmlichem ITO mit Hilfe eines Kneters gemischt. Es wurden jedoch keine Aussagen bezüglich der Transparenz der Mischung gegeben. Herkömmliches ITO ergibt mit Polycarbonat trübe Komposite. Dies ist für viele der hier gewünschten Anwendungen, z.B. für Verscheibungen, ungeeignet.

Herkömmliche NIR-absorbierende Nanopartikel (im folgenden sollen unter Nanopartikel Teilchen mit einer Größe von weniger als 200 nm verstanden werden), die aufgrund ihrer Kleinheit unsichtbar sind, wenn sie fein verteilt sind, eignen sich zwar zur Einbringung in ein Lacksystem jedoch nicht zum Einarbeiten in ein thermoplastisches Polymer, da die Nanopartikel unter den üblichen Einarbeitungsbedingungen agglomerieren und somit aufgrund von Lichtstreuung an den Agglomeraten trübe Zusammensetzungen bilden.

Bislang sind keine thermoplastischen Formmassen mit NIR-absorbierende Nanopartikel bekannt, welche bei einem LTA-Wert von größer als 70 % einen TDS-Wert von kleiner als 50 % erreichen.

Wegen des hohen Preises der NIR-absorbierenden Nanopartikel ist es ferner wünschenswert Zusammensetzungen zu entwickeln, die einen möglichst geringen Anteil dieser NIR-absorbierenden Nanopartikel benötigen.

Wünschenswert sind NIR-Absorber, welche einerseits in einem großen Bereich des NIR absorbieren, jedoch gleichzeitig eine hohe Transparenz im sichtbaren Bereich des elektromagnetischen Spektrums aufweisen, und welche sich in transparente thermoplastische Polymere einarbeiten lassen, ohne zu agglomerieren.

JP-A-09208863 beschreibt IR-absorbierende Zusammensetzungen, die eine filmbildende Harzkomponente, halbleitende Metalloxid-Teilchen, Kupferionen und ein IR-Absorptionsmittel wie ein Phthalocyanin umfassen können. Als halbleitende Metalloxid-Teilchen wird antimondotiertes Zinnoxid (ATO) mit einer Teilchengröße von 0,001 bis 0,05 µm als Beispiel aufgeführt.

EP-A-0795565 betrifft aktinische strahlungshärtbare und Wärmestrahlen abweisende Harzzusammensetzungen sowie daraus hergestellte Filme, die ein Bindemittel, Sonnenstrahlen absorbierende anorganische Metallverbindungen und eine Phthalocyaninverbindung umfassen können. In den Beispielen werden Zusammensetzungen beschrieben, die als anorganische Metallverbindungen ATO mit einer primären Teilchengröße unter 0,1 µm enthalten.

US-A-5807511 beschreibt eine Zusammensetzung zur Herstellung von NIR-absorbierenden Filtern, enthaltend ein Bindemittel und ein Metalloxid-Pulver. Bei dem Metalloxid kann es sich um ATO handeln.

JP-A-09059591 beschreibt wärmeabsorbierende Zusammensetzungen, die dotierte Zinkoxid-Teilchen und einen organischen IR-Absorber enthalten. Zur Herstellung der Teilchen können Oberflächenmodifizierungsmittel verwendet werden, die unter anderem Silanierungsmittel umfassen können.

JP-A-10101375 betrifft Sonnenstrahlen abschirmende Zusammensetzungen, die ein Bindemittel enthalten und bei denen Ruthenoxid-Teilchen und Teilchen wie z.B. ATO in einem Dispersionsmedium dispergiert werden. Als Dispersionsmedium kann Wasser oder ein organisches Lösungsmittel verwendet werden und die Stabilität kann durch einen Haftvermittler oder Tenside erhöht werden.

Der vorliegenden Erfindung liegt die Aufgabe zugrunde Zusammensetzungen bereitzustellen, die einen LTA-Wert von ≥ 70 % und einen TDS-Wert von < 50 %, bevorzugt < 40 % zeigen und somit einen wirkungsvollen Wärmeschutz für Verscheibungen und ähnliche Anwendungen bieten. Dabei soll das übrige Spektrum an Werkstoffeigenschaften der Zusammensetzung möglichst nicht beeinträchtigt werden. Die Nachteile der aus dem Stand der Technik bekannten Zusammensetzungen sollen überwunden werden.

Bevorzugt sollen die bereitzustellenden Zusammensetzungen einen LTA-Wert von ≥ 70 % und einen TDS-Wert von < 50 %, insbesondere < 40 %, zeigen und somit einen wirkungsvollen Wärmeschutz für Verscheibungen und ähnliche Anwendungen bieten.

Es wurde nun überraschend gefunden, dass durch Zusatz von oberflächenmodifizierten Oxiden mit einer Teilchengröße von weniger als 200 nm und gleichzeitigem Zusatz von organischem NIR-Absorber zu transparenten thermoplastischen Polymeren Zusammensetzungen erhalten werden, welche im sichtbaren Bereich des Lichts eine hohe Transparenz aufweisen und gleichzeitig im nahen Infrarot eine intensive Absorption zeigen. Diese Zusammensetzungen können z.B. durch Extrusion oder mittels eines Kneters hergestellt werden.

Die erfindungsgemäßen Zusammensetzungen haben zahlreiche Vorteile. Die durch das transparente thermoplastische Polymer und gegebenenfalls durch weitere vorhandene Additive bestimmten Werkstoffeigenschaften der Zusammensetzungen werden durch die erfindungsgemäßen Oxidteilchen und die organischen NIR-Absorber nicht wesentlich beeinträchtigt.

Außerdem haben die erfindungsgemäßen Zusammensetzungen die Vorteile hoher Lichtbeständigkeit, hoher thermischer Beständigkeit sowie geringer Eigenfarbe.

Außerdem haben die erfindungsgemäßen Zusammensetzungen den Vorteil, dass die erfindungsgemäßen NIR-absorbierenden Nanopartikel lediglich in geringen Mengen eingesetzt werden müssen. Dies ist günstig, weil die NIR-absorbierenden Nanopartikel teuer sind. Dies ist möglich, weil die Kombination aus den NIR-absorbierenden Nanopartikeln und den organischen NIR-Absorbern einen synergistischen Effekt in Bezug auf die NIR-Absorption zeigt.

Gegenstand der Erfindung sind somit Zusammensetzungen enthaltend
a) ein transparentes thermoplastisches Polymer und
b) Oxidteilchen ausgewählt aus der Gruppe bestehend aus Zinnoxid, in dem 2 bis 60 % der Zinnatome durch Antimonatome ersetzt sind, und Zinnoxid, in dem 10 bis 70 % der Sauerstoffatome durch Fluoratome ersetzt sind,
   wobei die durchschnittliche Teilchengröße der Oxidteilchen (gemessen durch Ultrazentrifugation) kleiner als 200 nm ist,
   und wobei die Oberfläche der Oxidteilchen mit einem Polyvinylbutyral oder mit einer Verbindung der allgemeinen Formel (I)

   SiR¹R²R³R⁴ (I)

   mit
   R¹ = Alkylsubstituent mit 6 bis 30, bevorzugt 6 bis 20, besonders bevorzugt 12 bis 18 C-Atomen,
   R² = Alkylsubstituent mit 1 bis 30, bevorzugt 1 bis 18, besonders bevorzugt 1 bis 6, C-Atomen oder Alkoxysubstituent mit 1 bis 30, bevorzugt 1 bis 6, besonders bevorzugt 1 bis 2, C-Atomen oder Cl oder Br oder I,
   R³ = Alkylsubstituent mit 1 bis 30, bevorzugt 1 bis 18, besonders bevorzugt 1 bis 6, C-Atomen oder Alkoxysubstituent mit 1 bis 30, bevorzugt 1 bis 6, besonders bevorzugt 1 bis 2, C-Atomen oder Cl oder Br oder I,
   R⁴ = Alkoxysubstituent mit 1 bis 30, bevorzugt 1 bis 6, besonders bevorzugt 1 bis 2, C-Atomen oder Cl oder Br oder I,
   modifiziert ist, und
c) organische NIR-Absorber.

Die erfindungsgemäßen organischen NIR-Absorber werden bevorzugt in Konzentration von 0,1 ppm bis 1 Gew.-%, besonders bevorzugt zwischen 1 ppm und 1000 ppm und ganz besonders bevorzugt zwischen 30 und 200 ppm verwendet.

Die erfindungsgemäßen Oxidteilchen sind bevorzugt in Konzentrationen von 1 ppm bis 10 Gew.-%, besonders bevorzugt zwischen 100 ppm und 5 Gew.-% und ganz besonders bevorzugt zwischen 0,2 Gew.-% und 2 Gew.-% in den erfindungsgemäßen Zusammensetzungen enthalten.

Diese Konzentrationen beziehen sich auf 1 mm bis 10 mm dicke Schichten. Für dünnere Schichten wie z.B. Folien oder coextrudierte Schichten sind entsprechend höhere Konzentrationen nötig.

Gegenstand der Erfindung ist somit auch die Verwendung der genannten Oxidteilchen zur Herstellung von Zusammensetzungen enthaltend
a) ein transparentes thermoplastisches Polymer und
b) die Oxidteilchen, bevorzugt in einer Menge von 0,01 bis 30 Gewichtsteilen, besonders bevorzugt 0,1 bis 2 Gewichtsteilen, pro 100 Gewichtsteile transparentem, thermoplastischem Polymer und
c) organische NIR-Absorber.

Außerdem ist Gegenstand der Erfindung ein Verfahren zur Herstellung der genannten Zusammensetzungen durch Zugabe der Oxidteilchen und der organischen NIR-Absorber, zusammen oder getrennt, vor, während oder nach der Polymerisation des transparenten, thermoplastischen Polymeren zu dem transparenten thermoplastischen Polymeren oder den Monomeren, aus denen das transparente thermoplastische Polymer polymerisiert wird.

Weiterhin ist Gegenstand der Erfindung die Verwendung der genannten Zusammensetzungen zur Herstellung von Platten, Folien, Verscheibungen, Bedachungen oder anderen Erzeugnissen.

Weiterhin ist Gegenstand der Erfindung ein Verfahren zur Herstellung von Erzeugnissen aus den genannten Zusammensetzungen umfassend die Verarbeitung der Zusammensetzungen durch Extrusion oder Spritzguss.

Außerdem sind Gegenstand der Erfindung Erzeugnisse enthaltend die genannten Zusammensetzungen. Bevorzugt ist hierbei, dass die Erzeugnisse im wesentlichen die genannten Zusammensetzungen enthalten. Besonders bevorzugt ist hierbei dass die Erzeugnisse aus den genannten Zusammensetzungen bestehen.

Insbesondere sind Gegenstand der Erfindung Platten oder Folien oder Verscheibungen oder Bedachungen, enthaltend die genannten Zusammensetzungen. Bevorzugt ist hierbei, dass die Platten oder Folien oder Verscheibungen oder Bedachungen im wesentlichen die genannten Zusammensetzungen enthalten. Besonders bevorzugt ist hierbei, dass die Platten oder Folien oder Verscheibungen oder Bedachungen aus den genannten Zusammensetzungen bestehen.

Bevorzugte Oxidteilchen bestehen aus Zinnoxid, in dem 2 bis 60 % der Zinnatome durch Antimonatome ersetzt sind (sog. antimondotiertes Zinnoxid; Abk.: ATO).

Weiterhin bevorzugte Oxidteilchen sind solche, bestehend aus Indiumoxid, in dem 10 bis 70 % der Sauerstoffatome durch Fluoratome ersetzt sind (sog. fluordotiertes Zinnoxid; Abk.: FTO).

Die durchschnittliche Teilchengröße der erfindungsgemäßen Oxidteilchen (gemessen durch Ultrazentrifugation) ist kleiner als 200 nm. Sie ist bevorzugt zwischen 3 nm und 200 nm, besonders bevorzugt zwischen 5 nm und 50 nm, ganz besonders bevorzugt zwischen 5 nm und 30 nm.

Die erfindungsgemäßen Oxidteilchen werden durch eine spezielle Oberflächenbehandlung (auch Oberflächenmodifikation genannt) mit Oberflächenmodifikatoren vor Agglomeration bei der Verarbeitung (z.B. der Herstellung der erfindungsgemäßen Zusammensetzungen) geschützt. Für eine Oberflächenbehandlung sind Polyvinylbutyral und Verbindungen der allgemeinen Formel (I) geeignet:

SiR¹R²R³R⁴ (I)

wobei für R¹, R², R³ und R⁴ die gegebenen Definitionen gelten.

Besonders geeignet sind n-Octadecyltrimethoxysilan, n-Hexadecyltrimethoxysilan, Methyl-n-octadecyldimethoxysilan, Dimethyl-n-octadecylinethoxysilan, n-Dodecyltriethoxysilan, n-Octadecylmethyldiethoxysilan.

Ganz besonders geeignet sind n-Octadecyltrimethoxysilan und n-Hexadecyltrimethoxysilan.

Ferner ist Polyvinylbutyral (PVB) geeignet.

Es sind auch Mischungen aus mehreren der genannten Oberflächenmodifikatoren geeignet.

Die Verbindungen SiR¹R²R³R⁴ der allgemeinen Formel (I) sind nach bekannten Methoden herstellbar. Sie sind auch im Handel erhältlich, beispielsweise bei der Fa. Aldrich (D-89555 Steinheim, Deutschland).

Die Oberflächenmodifikation der erfindungsgemäßen Oxidteilchen kann nach beliebigen dem Fachmann bekannten Verfahren durchgeführt werden.

Die Herstellung der erfindungsgemäßen Oxidteilchen kann nach bekannten Verfahren erfolgen. Beispielsweise und bevorzugt kann ein Cofällungsprozess von Salzen der verwendeten Bestandteile in Gegenwart einer oder mehreren oberflächenmodifizierten Komponenten verwendet werden. Nach Entfernung des Lösungsmittels werden dabei die erhaltenen Pulver unter reduzierenden Bedingungen kalziniert und dann nach Zugabe von Additiven und eines weiteren Oberflächenmodifikators (Dispergierhilfe) einer mechanischen Zerkleinerungsbehandlung unterworfen.

Bei der oberflächenmodifizierenden Komponente, welche bei der Herstellung der erfindungsgemäßen Oxidteilchen verwendet werden, sind folgende Verbindungen verwendbar:
1. Gruppe der Mono- und Polycarbonsäuren, wie z.B. Essigsäure, Propionsäure, Buttersäure, Pentansäure, Hexansäure, Acrylsäure, Metacrylsäure, Crotonsäure, Zitronensäure, Adipinsäure, Bernsteinsäure, Glutansäure, Oxalsäure, Maleinsäure, Stearinsäure und insbesondere Trioxadekansäure sowie den entsprechenden Anhydriden.
2. Betacarbonylverbindungen, insbesondere Acetylaceton, 2,4-Hexandion, 3,5-Heptandion, Acetessigsäure und Acetessigsäurealkylester.
3. Aminosäuren, insbesondere β-Alanin.
4. Doppelkammpolymere, insbesondere Tween80^{®}.
5. Säureamide, insbesondere Caprolactam.

Zur Suspensionsherstellung werden unter Verwendung der schon oben genannten oberflächenaktiven Substanzen die Pulver z.B. über einen mechanischen Zerkleinerungsprozess dispergiert. Die Zerkleinerung erfolgt z.B. in Planetkugelmühlen, Rührwerkskugelmühlen und insbesondere in der Mörsermühle und im Walzenstuhl in Lösungsmitteln wie Wasser, Toluol, aber insbesondere in Ethylenglykol oder Diethylenglykolmonobutylether.

Bezogen auf 100 Gewichtsteile erfindungsgemäße Oxidteilchen werden die Oberflächenmodifikatoren bevorzugt in Mengen von 10 bis 2 000 Teilen, besonders bevorzugt in Mengen von 90 bis 1 000 Teilen und ganz besonders bevorzugt in Mengen von 90 bis 600 Teilen eingesetzt.

Erfindungsgemäß geeignete organische NIR-Absorber sind organische NIR-Absorber, welche eine besonders hohe Lichstabilität zeigen und eine hohe thermische Stabilität zeigen, und mit herkömmlichen Methoden in transparenten thermoplastischen Polymeren verarbeitbar sind.

Besonders geeignet sind organische NIR-Absorber sind aufgrund ihrer hohen Lichtechtheit und thermischen Beständigkeit Phthalocyanine und Naphthalocyanine.

Als Phthalocyanine sind besonders geeignet Verbindungen der allgemeinen Formel (II) 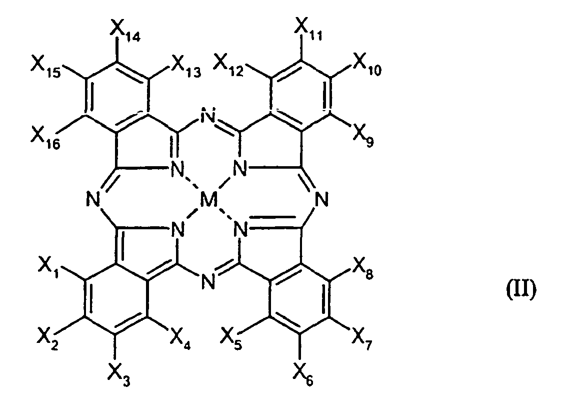 worin
- M: ein beliebiges Metallzentrum oder Wasserstoff, bevorzugt VO, Cu, Al, Zn, Ni, HH, SiR₂, AIR, Mg, Fe, GaR, MnR, SnR, Na₂, Li₂, TiO und besonders bevorzugt VO oder Cu ist,
- R: ein aliphatischer oder aromatischer Rest, auch ein Alkoxyrest bzw. Aryloxyrest ist und
- X₁ bis X₁₆: unabhängig voneinander Wasserstoff, Halogen, aliphatischer Rest, aromatischer Rest, Alkoxyrest, Aryloxyrest, -S-Alkyl, -S-Aryl, -NH-Alkyl, -NH-Aryl, -NAlkyl₂, -NAryl₂, -NHCO-Alkyl oder -NHCO-Aryl sind.
wobei sperrige Reste wie tert.-Butyl, Phenoxy oder Phenyl bevorzugt sind.

Besonders bevorzugt sind Kupfer(II) 1,4,8,11,15,18,22,25-octabutoxy-29H,31H-phthalocyanin oder Vanadyl 2,9,16,23-tetraphenoxy-29H,31H-phthalocyanin.

Die erfindungsgemäßen Phthalocyanine sind bevorzugt in Konzentrationen von 0,1 ppm bis 1 Gew.-%, besonders bevorzugt zwischen 1 ppm und 0,1 Gew.-% und besonders bevorzugt zwischen 30 und 200 ppm in den erfindungsgemäßen Zusammensetzungen enthalten.

Als Naphthalocyanine sind besonders geeignet Verbindungen der Formel III 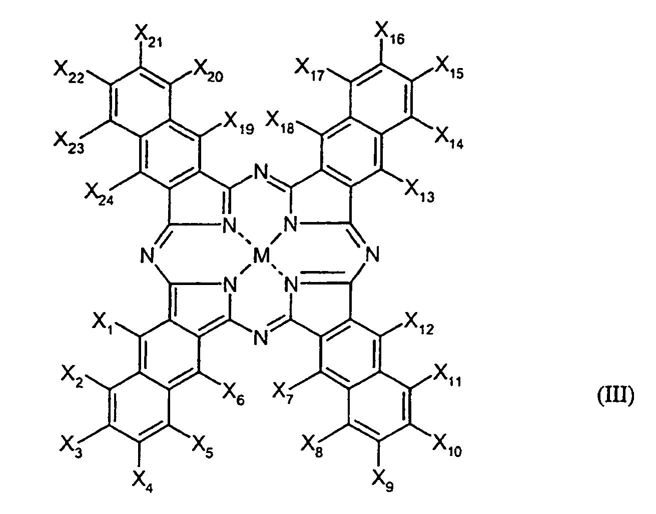 worin
- M: ein beliebiges Metallzentrum oder Wasserstoff, bevorzugt VO, Cu, Al, Zn, Ni, HH, SiR₂, AIR, Mg, Fe, GaR, MnR, SnR, Na₂, Li₂, TiO und besonders bevorzugt VO oder Cu ist,
- R: ein aliphatischer oder aromatischer Rest, auch ein Alkoxyrest bzw. Aryloxyrest ist und
- X₁ bis X₂₄: unabhängig voneinander Wasserstoff, Halogen, aliphatischer Rest, aromatischer Rest, Alkoxyrest, Aryloxyrest, -S-Alkyl, -S-Aryl, -NH-Alkyl, NH-Aryl, -NAlkyl₂, -NAryl₂, -NHCO-Alkyl oder -NHCO-Aryl sind,
wobei sperrige Reste wie tert.-Butyl, Phenoxy oder Phenyl bevorzugt sind.

Besonders bevorzugt sind Vanadyl 5,14,23,32-tetraphenyl-2,3-naphthalocyanin und Vanadyl 2,11,20,29-tetra-tert-butyl-2,3-naphthalocyanin.

Die erfindungsgemäßen Naphthalocyanine sind bevorzugt in Konzentrationen von 0,1 ppm bis 1 Gew.-%, besonders bevorzugt zwischen 1 ppm und 0,1 Gew.-% und ganz besonders bevorzugt zwischen 30 und 200 ppm in den erfindungsgemäßen Zusammensetzungen enthalten.

Es sind auch Mischungen verschiedener Naphthalocyanine und Phthalocyanine geeignet. Bevorzugt sind Mischungen von jeweils mehreren Naphthalocyaninen und Phthalocyaninen, welche Absorptionsmaxima bei unterschiedlichen Wellenlängen des NIR besitzen.

Es können auch Mischungen von einem oder mehreren Phthalocyaninen oder Naphthalocyaninen mit weiteren NIR-Absorber verwendet werden.

Ferner können auch Mischungen mit herkömmlichen Farbstoffen, welche im sichtbaren Bereich absorbieren, verwendet werden um einen gewünschten Farbton zu erzeugen.

Die Farbstoffe können in Konzentrationen von 0,1 ppm bis 1 Gew.-% eingesetzt werden, bevorzugt zwischen 1 ppm und 0,1 Gew.-% und besonders bevorzugt zwischen 10 und 200 ppm.

Die Herstellung der erfindungsgemäßen NIR-Absorber kann nach bekannten Methoden erfolgen. Diese sind beispielsweise beschrieben in "Phthalocyanines and Related Compounds", Hanack, Heckmann and Polley, Houben-Weyl, Vol. E9d, Seite 717 bis 824, Thiene Verlag, Stuttgart, 1998. Teilweise sind sie im Handel erhältlich.

Transparente thermoplastische Polymere im Sinne der Erfindung sind z.B. Polycarbonate, aromatische Polyester, wie z.B. PET, PEN oder PETG, transparente thermoplastische Polyurethane, transparente Acrylate und Methacrylate wie z.B. PMMA, sowie Polyolefine, wie z.B. transparente Polypropylentypen oder Polyolefine auf der Basis von cyclischen Olefinen (z.B. TOPAS^{®}, ein Handelsprodukt der Firma Ticona). Auch Mischungen von mehreren transparenten thermoplastischen Polymeren sind möglich.

Bevorzugt sind Polycarbonate oder Copolycarbonate.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinne der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 835, US-A 3 148 172, US-A 2 991 273, US-A 3 271 367, US-A 4 982 014 und US-A 2 999 846, in DE-A 1 570 703, DE-A 2 063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol 2,4,6-Trijodphenol, p-Jodphenol, sowie deren Mischungen.

Bevorzugter Kettenabbrecher ist p-tert.-Butylphenol.

Geeignete Monocarbonsäuren sind weiterhin Benzoesäure, Alkylbenzoesäuren und Halogenbenzoesäuren.

Bevorzugte Kettenabbrecher sind die Phenole der Formel (IV) 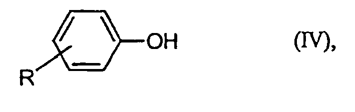 worin
- R: Wasserstoff oder ein C₁-C₃₀ Alkylrest, linear oder verzweigt ist, bevorzugt tert.-Butyl ist oder ein verzweigter oder unverzweigter C₈- und/oder C₉-Alkylrest ist.

Die Menge an einzusetzendem Kettenabbrecher beträgt bevorzugt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Die erfindungsgemäßen Zusammensetzungen können ferner noch übliche Polymeradditive enthalten, wie z.B. die in EP-A 0 839 623, WO 96/15102 und EP-A 0 500 496 beschriebenen UV-Stabilisatoren, Antioxidantien und Entformungsmittel, aber auch literaturbekannte Flammschutzmittel, Glasfasern, Füllstoffe, Schaummittel, Pigmente, optische Aufheller oder Farbstoffe, in den für die jeweiligen Thermoplasten üblichen Mengen. Bevorzugt sind Mengen von jeweils bis zu 5 Gew.-%, bevorzugt 0,01 bis 5 Gew.-% bezogen auf die Menge der Zusammensetzungen, besonders bevorzugt 0,01 Gew.-% bis 1 Gew.-% bezogen auf die Menge der Zusammensetzungen. Auch Mischungen mehrerer Zusatzstoffe sind geeignet.

Erfindungsgemäß besonders geeignete UV-Absorber und Antioxidantien sind z.B. in EP-A 0 839 623, WO 96/15102 und EP-A 0 500 496 beschrieben.

Besonders geeignet als UV-Absorber sind Benzotriazole, Triazine, Benzophenone, sowie weitere Verbindungen wie z.B. arylierte Cyanoacrylate. Erfindungsgemäß ganz besonders bevorzugt geeignet sind Hydroxy-Benzotriazole, wie 2-(3',5-'Bis-(1,1-dimethylbenzyl)-2'-hydroxy-phenyl)-benzotriazol (Tinuvin^{®} 234, Ciba Spezialitätenchemie, Basel), Tinuvin^{®} 326 FL (Ciba Spezialitätenchemie, Basel), 2-(2'-Hydroxy-5'-(tert-octyl)-phenyl)-benzotriazol (Tinuvin^{®} 329, Ciba Spezialitätenchemie, Basel), 2-(2'-Hydroxy-3'-(2-butyl)-5'-(tert-butyl)-phenyl)-benzotriazol (Tinuvin^{®} 350, Ciba Spezialitätenchemie, Basel), Bis-(3-(2H-benztriazolyl)-2-hydroxy-5-tert-octyl)methan, (Tinuvin^{®} 360, Ciba Spezialitätenchemie, Basel), 2-(4-Hexoxy-2-hydroxyphenyl)-4,6-diphenyl-1,3,5-triazin (Tinuvin^{®} 1577, Ciba Spezialitätenchemie, Basel), sowie das Benzophenon 2,4-Dihydroxy-benzophenon (Chimasorb22^{®}, Ciba Spezialitätenchemie, Basel).

Bevorzugt werden die UV-Absorber in Mengen von jeweils zwischen 0.001 Gew.-% und 10 Gew.-%, bevorzugt 0.01 Gew.-% und 1 Gew.-% vorzugsweise zwischen 0.1-1 Gew.-% und ganz besonders bevorzugt zwischen 0.2 und 0.6 Gew.-% eingesetzt.

Es ist bevorzugt, dass die als Verunreinigung vorhandenen Ionengehalte in den erfindungsgemäßen Zusammensetzungen weniger als 10 ppm betragen, besonders bevorzugt weniger als 5 ppm.

Die Maßnahmen zur Herstellung der thermoplastischen Polycarbonate sind dem Fachmann geläufig.

Die erfindungsgemäßen Zusammensetzungen können nach den üblichen Methoden, wie z.B. Heißpressen, Spinnen, Extrudieren oder Spritzgießen, in Erzeugnisse, d.h. geformte Gegenstände überführt werden, wie z.B. Spielzeugteile, aber auch Fasern, Folien, Bändchen, Platten, Stegplatten, Gefäße, Rohre und sonstige Profile. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Die erfindungsgemäßen Zusammensetzungen können zu Erzeugnissen verarbeitet werden, in dem man beispielsweise die Zusammensetzungen zu Granulat extrudiert und dieses Granulat, gegebenenfalls nach Zusatz der obengenannten Additive, durch Spritzguss oder Extrusion zu verschiedenen Erzeugnissen in bekannter Weise verarbeitet.

Die erfindungsgemäßen Zusammensetzungen können zu Erzeugnissen verarbeitet werden, in dem man die in bekannter Weise isolierten transparenten thermoplastischen Polymeren zu Granulat extrudiert und dieses Granulat, gegebenenfalls nach Zusatz der Additive, durch Spritzguss zu verschiedenen Artikeln in bekannter Weise verarbeitet. Die Zusammensetzungen können aber auch auf einem Kneter verarbeitet werden.

Die erfindungsgemäßen Zusammensetzungen können ferner noch übliche Thermostabilisatoren enthalten. Als Thermostabilisatoren sind erfindungsgemäß besonders geeignet: gehinderte Phenole, beispielsweise Octadecyl-3-(3',5'-di-*tert*-butyl-4'-hydroxyphenyl)-propionat (Irganox^{®} 1076, Ciba Specialty Chemicals, Basel, Schweiz). Weiterhin sind erfindungsgemäß besonders geeignete Thermostabilisatoren Phosphite, insbesondere Tris(2,4-di-*tert*-butyl-phenyl)-phosphit (Irgafos^{®} 168, Ciba Specialty Chemicals, Basel, Schweiz) oder Phosphine, wie z.B. Triphenylphosphin.

Die erfindungsgemäßen Zusammensetzungen können übliche Entformungsmittel enthalten. Besonders geeignete Entformungsmittel sind Pentaerythrittetrastearat (PETS) oder Glycerinmonostearat (GMS).

Erfindungsgemäß bevorzugte Erzeugnisse sind Platten, Folien, Verscheibungen, beispielsweise Autosonnendächer, Bedachungen oder Gebäudeverglasungen, die die erfindungsgemäßen Zusammensetzungen enthalten. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialien am Rand der Verscheibungen enthalten. Bedachungen können beispielsweise Metallkomponenten wie Schrauben oder ähnliches enthalten die zur Befestigung der Bedachungselemente dienen können.

Die erfindungsgemäßen Zusammensetzungen sind als transparente Erzeugnisse universell einsetzbar, wo Wärmedurchlässigkeit unerwünscht ist. Besonders geeignet ist die Anwendung bei Automobilkomponenten, wie z.B. Verscheibungselemente, Autosonnendächer oder Kunststoffstreuscheiben. Ebenfalls besonders geeignet ist die Anwendung bei extrudierten Platten, wie z.B. Massivplatten, Doppelstegplatten oder Multistegplatten, optional auch mit einer oder mehreren coextrudierten Schichten für Gebäudeverglasung oder Gewächshäuser, sowie die Anwendung in Spritzgußteilen, wie Lebensmittelbehälter, Bestandteilen von Elektrogeräten und in Brillengläser z.B. auch für Schutzbrillen.

## Patentansprüche

1. Zusammensetzungen enthaltend
a) ein transparentes thermoplastisches Polymer und
b) Oxidteilchen ausgewählt aus der Gruppe bestehend aus Zinnoxid, in dem 2 bis 60% der Zinnatome durch Antimonatome ersetzt sind, und Zinnoxid, in dem 10 bis 70% der Sauerstoffatome durch Fluoratome ersetzt sind,
und wobei die durchschnittliche Teilchengröße der Oxidteilchen kleiner als 200 nm ist,
und wobei die Oberfläche der Oxidteilchen mit einem Polyvinylbutyral oder mit einer Verbindung der allgemeinen Formel (I)
SiR¹R²R³R⁴ (I)
mit
R¹ = Alkylsubstituent mit 6 bis 30 C-Atomen,
R² = Alkylsubstituent mit 1 bis 30 C-Atomen oder Alkoxysubstituent mit 1 bis 30 C-Atomen oder Cl oder Br oder I,
R³ = Alkylsubstituent mit 1 bis 30 C-Atomen oder Alkoxysubstituent mit 1 bis 30 C-Atomen oder Cl oder Br oder I,
R⁴ = Alkoxysubstituent mit 1 bis 30 C-Atomen oder Cl oder Br oder I,
modifiziert ist, und
c) organische NIR-Absorber.

2. Zusammensetzungen nach Anspruch 1, wobei der organische NIR-Absorber eine Verbindung der allgemeinen Formel (II) 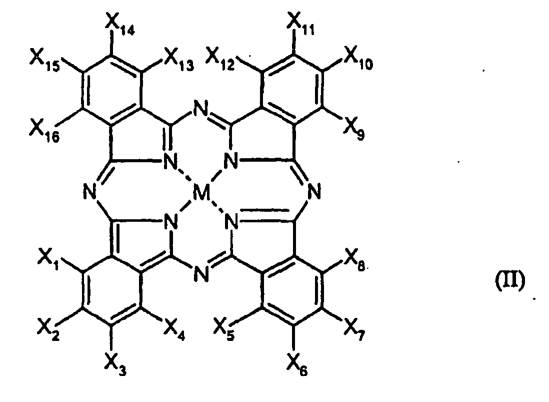 worin
M ein beliebiges Metallzentrum oder Wasserstoff ist und
X₁ bis X₁₆ unabhängig voneinander Wasserstoff, Halogen, aliphatischer Rest, aromatischer Rest, Alkoxyrest, Aryloxyrest, -S-Alkyl, -S-Aryl, -NH-Alkyl, -NH-Aryl, -NAlkyl₂, -NAryl₂, -NHCO-Alkyl oder -NHCO-Aryl sind,
ist.

3. Zusammensetzungen nach Anspruch 1, wobei der organische NIR-Absorber eine Verbindung der Formel (III) 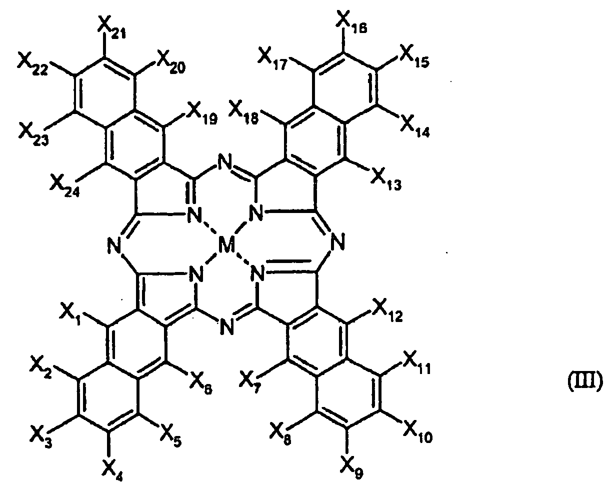 worin
M ein beliebiges Metallzentrum oder Wasserstoff ist und
X₁ bis X₂₄ unabhängig voneinander Wasserstoff, Halogen, aliphatischer Rest, aromatischer Rest, Alkoxyrest, Aryloxyrest, -S-Alkyl, -S-Aryl, -NH-Alkyl, -NH-Aryl, -NAlkyl₂, -NAryl₂, -NHCO-Alkyl oder -NHCO-Aryl sind,
ist.

4. Verfahren zur Herstellung der Zusammensetzungen gemäß einem der Ansprüche 1 bis 3 durch Zugabe der Oxidteilchen und der organischen NIR-Absorber, zusammen oder getrennt, vor, während oder nach der Polymerisation des transparenten, thermoplastischen Polymeren zu dem transparenten thermoplastischen Polymeren oder den Monomeren, aus denen das transparente themnoplastische Polymer polymerisiert wird.

5. Verwendung der Zusammensetzungen gemäß einem der Ansprüche 1 bis 3 zur Herstellung von Platten, Folien, Verscheibungen, Bedachungen oder anderen Erzeugnissen.

6. Verfahren zur Herstellung von Erzeugnissen aus Zusammensetzungen gemäß einem der Ansprüche 1 bis 3 umfassend die Verarbeitung der Zusammensetzungen durch Extrusion oder Spritzguss.

7. Erzeugnisse enthaltend die Zusammensetzungen gemäß einem der Ansprüche 1 bis 3.

8. Platten oder Folien oder Verscheibungen oder Bedachungen, enthaltend die Zusammensetzungen gemäß einem der Ansprüche 1 bis 3.

## Claims

1. Compositions comprising
a) a transparent thermoplastic polymer and
b) oxide particles selected from the group consisting of tin oxide in which 2 to 60% of the tin atoms are replaced by antimony atoms, and tin oxide in which 10 to 70% of the oxygen atoms are replaced by fluorine atoms, and wherein the average particle size of the oxide particles is less than 200 nm,
and wherein the surface of the oxide particles is modified with a polyvinyl acetal or with a compound having the general formula (I)
SiR¹R²R³R⁴ (I)
where
R¹ = alkyl substitutent having 6 to 30 C atoms,
R² = alkyl substituent having 1 to 30 C atoms or alkoxy substituent having 1 to 30 C atoms or Cl or Br or I,
R³ = alkyl substituent having 1 to 30 C atoms or alkoxy substituent having 1 to 30 C atoms or Cl or Br or I,
R⁴ = alkoxy substituent having 1 to 30 C atoms or Cl or Br or I, and
c) organic NIR absorbers.

2. Compositions according to claim 1, wherein the organic NIR absorber is a compound having the general formula (II) 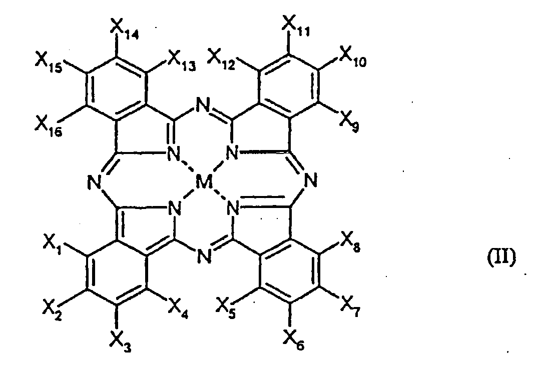 where
M is any metal centre or hydrogen and
X₁ to X₁₆ are mutually independently hydrogen, halogen, aliphatic radical, aromatic radical, alkoxy radical, aryloxy radical, -S alkyl, -S aryl, -NH alkyl, -NH aryl, -N alkyl₂, -N aryl₂, -NHCO alkyl or -NHCO aryl.

3. Compositions according to claim 1, wherein the organic NIR absorber is a compound having the formula (III) 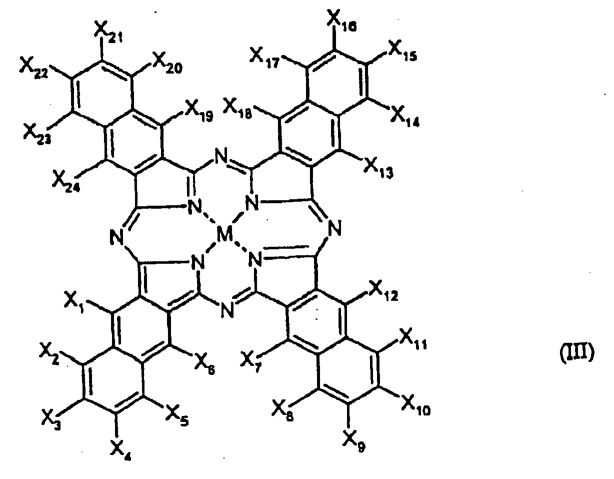 where
M is any metal centre or hydrogen and
X₁ to X₂₄ are mutually independently hydrogen, halogen, aliphatic radical, aromatic radical, alkoxy radical, aryloxy radical, -S alkyl, -S aryl, -NH alkyl, -NH aryl, -N alkyl₂, -N aryl₂, -NHCO alkyl or -NHCO aryl.

4. A process for the production of compositions according to any one of claims 1 to 3 by addition of the oxide particles and the organic NIR absorbers, together or separately, before, during or after polymerisation of the transparent, thermoplastic polymer to the transparent thermoplastic polymer or to the monomers from which the transparent thermoplastic polymer is polymerised.

5. The use of the compositions according to any one of claims 1 to 3 in the manufacture of sheets, films, glazing systems, roofing systems or other products.

6. A process for the manufacture of products from compositions according to any one of claims 1 to 3, which comprises processing the compositions by extrusion or injection moulding.

7. Products comprising the compositions according to any one of claims 1 to 3.

8. Sheets or films or glazing systems or roofing systems comprising the compositions according to any one of claims 1 to 3.

## Revendications

1. Compositions contenant
a) un polymère thermoplastique transparent et
b) des particules d'oxyde choisies parmi le groupe constitué de l'oxyde d'étain, dans lequel 2 à 60 % des atomes d'étain sont remplacés par des atomes d'antimoine, et de l'oxyde d'étain, dans lequel 10 à 70 % des atomes d'oxygène sont remplacés par des atomes de fluor,
et la dimension moyenne des particules d'oxydé étant inférieure à 200 nm,
et la surface des particules d'oxyde étant modifiée à l'aide d'un polyvinylbutyral ou d'un composé de la formule générale (I)
SiR¹R²R³R⁴ (I)
avec
R¹ = un substituant alkyle avec 6 à 30 atomes de C,
R² = un substituant alkyle avec 1 à 30 atomes de C ou un substituant alcoxy avec 1 à 30 atomes de C ou Cl ou Br ou l,
R³ = un substituant alkyle avec 1 à 30 atomes de C ou un substituant alcoxy avec 1 à 30 atomes de C ou Cl ou Br ou l,
R⁴ = un substituant alcoxy avec 1 à 30 atomes de C ou Cl ou Br ou l,
et
c) des éléments organiques absorbants dans le NIR.

2. Compositions selon la revendication 1, l'élément organique absorbant dans le NIR étant un composé de la formule générale (II) 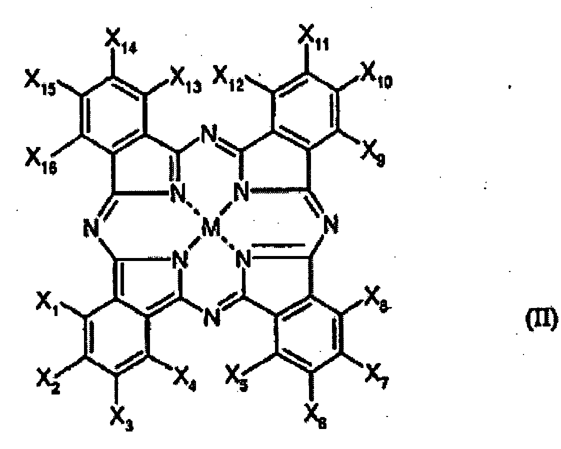 où
M est un centre métallique quelconque ou de l'hydrogène et
X₁ à X₁₆ sont, indépendamment les uns des autres, de l'hydrogène, un halogène, un radical aliphatique, un radical aromatique, un radical alcoxy, un radical aryloxy, -S-alkyle, -S-aryle, -NH-alkyle, -NH-aryle,-Nalkyle₂, -Naryle₂, -NHCO-alkyle ou -NHCO-aryle.

3. Compositions selon la revendication 1, l'élément organique absorbant dans le NIR étant un composé de la formule (III) 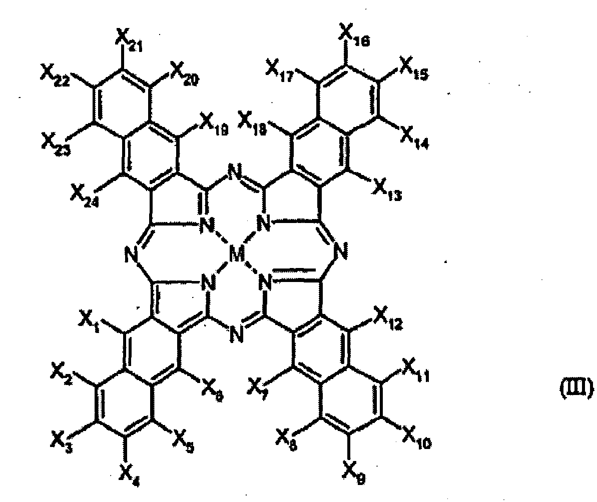 où
M est un centre métallique quelconque ou de l'hydrogène et
X₁ à X₂₄ sont, indépendamment les uns des autres, de l'hydrogène, un halogène, un radical aliphatique, un radical aromatique, un radical alcoxy, un radical aryloxy, -S-alkyle, -S-aryle, -NH-alkyle, -NH-aryle,-Nalkyle₂, -Naryle₂, -NHCO-alkyle ou -NHCO-aryle.

4. Procédé de fabrication des compositions selon l'une quelconque des revendications 1 à 3 en ajoutant les particules d'oxyde et les éléments organiques absorbants dans le NIR, ensemble ou séparément, avant, pendant ou après la polymérisation du polymère thermoplastique transparent en polymère thermoplastique transparent ou en monomères, à partir desquels le polymère thermoplastique transparent est polymérisé.

5. Utilisation des compositions selon l'une quelconque des revendications 1 à 3 pour fabriquer des plaques, des feuilles, des vitrages, des toitures ou d'autres produits.

6. Procédé pour fabriquer des produits à partir des compositions selon l'une quelconque des revendications 1 à 3, comportant le traitement des compositions par extrusion ou par moulage par injection.

7. Produits contenant les compositions selon l'une quelconque des revendications 1 à 3.

8. Plaques ou feuilles ou vitrages ou toitures contenant les compositions selon l'une quelconque des revendications 1 à 3.
